## Europäisches Patentamt

## European Patent Office

## Office européen des brevets

(19)

(11) **EP 1 365 217 A1**

(12) **EUROPÄISCHE PATENTANMELDUNG**

(43) Veröffentlichungstag:
**26.11.2003 Patentblatt 2003/48**

(51) Int Cl.⁷: **G01J 1/42**

(21) Anmeldenummer: 03008628.4

(22) Anmeldetag: **15.04.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **24.05.2002 DE 10223319**

(71) Anmelder: **Carl Zeiss Laser Optics GmbH 73447 Oberkochen (DE)**

(72) Erfinder: **Herkommer, Alois 73431 Aalen (DE)**

(74) Vertreter: **Heuckeroth, Volker, Dr. et al Witte, Weller & Partner, Patentanwälte, Postfach 105462 70047 Stuttgart (DE)**

(54) **Optisches Abbildungssystem zum Abbilden zumindest zweier in Strahlrichtung beabstandeter Ebenen eines Lichtstrahls**

(57) Ein optisches Abbildungssystem (10) zum Abbilden zumindest zweier in Strahlrichtung beabstandeter Ebenen eines Lichtstrahls (12), insbesondere Laserlichtstrahls, auf einen gemeinsamen Zielort (16), beispielsweise einen Detektor, weist zumindest ein im Strahlengang des Lichtstrahls (12) angeordnetes optisch abbildendes Element (18) auf. Das zumindest eine optisch abbildende Element (18) ist ein sammelnder Primärspiegel (M₁) und dem Primärspiegel (M₁) sind zumindest zwei Sekundärspiegel (S₁ - S₄) nachgeordnet, die wechselweise in den Strahlengang bringbar sind, wobei die Sekundärspiegel (S₁ - S₄) so ausgelegt sind, daß der eine Sekundärspiegel (S₁ - S₄) eine Abbildung der einen Ebene und der andere Sekundärspiegel (S₁ - S₄) eine Abbildung der anderen Ebene des Lichtstrahls (12) jeweils auf den Zielort (16) ermöglicht (Fig.1).

Fig.1

**Beschreibung**

Die Erfindung betrifft ein optisches Abbildungssystem zum Abbilden zumindest zweier in Strahlrichtung beabstandeter Ebenen eines Lichtstrahls, insbesondere Laserlichtstrahls, auf einen gemeinsamen Zielort, beispielsweise einen Detektor, mit zumindest einem im Strahlengang des Lichtstrahls angeordneten optisch abbildenden Element.

Ein solches optisches Abildungssystem ist aus der WO 01/59414 A1 bekannt.

Ein optisches Abbildungssystem der eingangs genannten Art wird insbesondere in einer Vorrichtung zur Strahlanalyse und/oder -justage eines Lichtstrahls, insbesondere Laserlichtstrahls, bzw. zur Justage eines Laserresonators verwendet.

Die vorliegende Erfindung betrifft ebenso eine Vorrichtung zur Strahlanalyse und/oder -justage, bei der ein optisches Abbildungssystem der zuvor genannten Art verwendet wird.

Die Strahlanalyse eines Lasers dient zur Beurteilung der Qualität und des Justagezustandes des Lasers, indem Informationen über die Intensitätsverteilung im Laserlichtstrahl an verschiedenen Ebenen bzw. Orten im Lichtstrahl bzw. im Laserresonator erhalten werden. Mit dem eingangs genannten Abbildungssystem soll es möglich sein, zumindest zwei in Strahlrichtung beabstandete Ebenen des Lichtstrahles auf einen gemeinsamen Zielort, beispielsweise einen Detektor, abzubilden. Das Abbildungssystem soll dabei beispielsweise in der Lage sein, den Querschnitt eines Laserstrahls an zumindest zwei verschiedenen Orten im Nahfeld des Lichtstrahls oder den Querschnitt des Lichtstrahls an einem Ort im Nahfeld sowie an einem Ort im Fernfeld des Lichtstrahls auf den gemeinsamen Zielort abzubilden. Aus der Abbildung einer Ebene im Fernfeld des Lichtstrahls ergeben sich Informationen über die Winkelverteilung bzw. Divergenz des Lichtstrahls. Zur Abbildung einer Ebene des Lichtstrahls im Fernfeld wird der Lichtstrahl dabei üblicherweise auf den Zielort fokussiert, während eine Ebene im Nahfeld des Lichtstrahls 1:1 auf den Zielort abgebildet wird.

In dem aus der oben genannten WO 01/59414 A1 bekannten Abbildungssystem wird der von der Lichtquelle, d.h. im dort beschriebenen Anwendungsfall einem Laser, kommende Lichtstrahl zunächst mittels eines Strahlteilers in zwei Teilstrahlen aufgespalten. Der eine Teilstrahl wird unter Nahfeldbedingungen auf den Zielort und der andere Teilstrahl unter Fernfeldbedingungen auf denselben Zielort, dort eine Kamera, abgebildet. In jedem Teilstrahl wird als optisch abbildendes Element eine Sammellinse verwendet.

Die Verwendung von Linsen als optisch abbildende Elemente hat jedoch den Nachteil, daß aufgrund von Dispersion das Abbildungssystem neu justiert werden muß, wenn Lichtstrahlen unterschiedlicher Wellenlänge abgebildet werden sollen. Die Analyse unterschiedlicher Lichtquellen, die Licht unterschiedlicher Wellenlänge emittieren, erfordert demnach bei diesem bekannten Abbildungssystem jeweils eine Neujustierung des Abbildungssystems, wobei die Justierung beispielsweise in einer mechanischen Positionierung der optisch abbildenden Elemente besteht.

Des weiteren ist es bei diesem bekannten Abbildungssystem erforderlich, wenn beispielsweise zwei unterschiedliche Ebenen im Nahfeld des Lichtstrahls auf den lagefesten Zielort abgebildet werden sollen, das Abbildungssystem ebenfalls durch Positionsveränderungen bspw. der Linse neu zu justieren.

Ein weiteres optisches Abbildungssystem ist aus dem Dokument US 6,014,206 bekannt, bei dem die gleichen Nachteile wie bei dem zuvor beschriebenen bekannten Abbildungssystem bestehen, weil auch dort als Abbildungssysteme abbildende bzw. fokussierende Linsen verwendet werden, wobei zur Abbildung verschiedener Ebenen des Lichtstrahls im Nahfeld die abbildende Linse neu positioniert werden muß.

Das Justieren eines derartigen Abbildungssystems zur Anpassung des Systems auf eine andere Wellenlänge oder zur Abbildung einer anderen Ebene des Lichtstrahls auf den Zielort erfordert jedoch bei der Bedienungsperson eine besondere Erfahrung und ist zeitaufwendig. Da ein solches Abbildungssystem jedoch auch im Kundenservice einsetzbar sein soll, sollte die Bedienung des Abbildungssystems mit möglichst geringem Aufwand bedienbar sein.

Der Erfindung liegt daher die Aufgabe zugrunde, ein optisches Abbildungssystem der eingangs genannten Art dahingehend weiterzubilden, daß es zum einen für unterschiedliche Wellenlängen verwendbar ist, und zum anderen die Abbildung zumindest zweier in Strahlrichtung beabstandeter Ebenen des Lichtstrahls ohne Justageaufwand ermöglicht.

Erfindungsgemäß wird diese Aufgabe hinsichtlich des eingangs genannten optischen Abbildungssystems dadurch gelöst, daß das zumindest eine optisch abbildende Element ein sammelnder Primärspiegel ist, und daß dem Primärspiegel zumindest zwei Sekundärspiegel nachgeordnet sind, die wechselweise in den Strahlengang bringbar sind, wobei die Sekundärspiegel so ausgelegt sind, daß der eine Sekundärspiegel eine Abbildung der einen Ebene und der andere Sekundärspiegel eine Abbildung der anderen Ebene des Lichtstrahls jeweils auf den Zielort ermöglicht.

Anstelle einer oder mehrerer Linsen weist das erfindungsgemäße Abbildungssystem als das zumindest eine optisch abbildende Element einen sammelnden Primärspiegel auf, der beispielsweise ein unbeschichteter bzw. metallischer Spiegel sein kann. Die Verwendung eines Spiegels als optisch abbildendes Element hat den Vorteil, daß die Abbildung des Lichtstrahls unabhängig von der Wellenlänge ist. Das erfindungsgemäße Abbildungssystem läßt sich somit für unterschiedliche Wellenlängen anwenden. Die dem Primärspiegel nachgeordneten zumindest zwei Sekundärspiegel, die wechselweise in den Strahlengang bringbar sind, haben nun den weiteren Vorteil, daß zum Abbilden der zumindest zwei Ebenen des Lichtstrahls jeweils der zur Abbildung dieser Ebene vorgesehene Sekundärspiegel in den Strahlengang gebracht wird, so daß zwischen der Abbildung der zwei Ebenen mit geringem Handhabungsaufwand lediglich umgeschaltet werden muß. Eine jeweilige Justage des erfindungsgemäßen Abbildungssystems wegen verschiedener Wellenlängen oder wegen der Abbildung verschiedener Ebenen des Lichtstrahls ist somit nicht erforderlich. Der Handhabungsaufwand des erfindungsgemäßen Abbildungssystems ist somit wesentlich vereinfacht. Das erfindungsgemäße optische Abbildungssystem kann sogar im Unterschied zu den aus dem Stand der Technik bekannten Abbildungssystemen prinzipiell ohne Strahlteiler auskommen, weil sowohl die Abbildung des Lichtstrahls unter Nahfeldbedingungen als auch unter Fernfeldbedingungen jeweils einem der Sekundärspiegel zugeordnet sein kann. Wenn beispielsweise nur zwei Sekundärspiegel vorhanden sind, kann beispielsweise der eine Sekundärspiegel so ausgelegt sein, daß er eine Abbildung einer Ebene im Fernfeld bzw. eine Fokussierung des Lichtstrahls auf den Zielort ermöglicht, während der andere Sekundärspiegel so ausgelegt sein kann, daß er eine im wesentlichen identische Abbildung einer Ebene im Nahfeld des Lichtstrahls ermöglicht. Diesbezüglich bevorzugte Ausgestaltungen werden hiernach noch beschrieben.

In einer bevorzugten Ausgestaltung sind die Sekundärspiegel an gleicher oder ähnlicher Position im Strahlengang des Lichtstrahls gegeneinander austauschbar angeordnet.

Bei dieser Ausgestaltung können die zumindest zwei Sekundärspiegel, vorzugsweise auch mehr als zwei Sekundärspiegel, beispielsweise auf einem Revolverrad in einer gemeinsamen Ebene angeordnet sein, wobei das Revolverrad durch das Gehäuse, das das Abbildungssystem einfaßt, von der Bedienungsperson gedreht werden kann, um jeweils einen der Sekundärspiegel in den Strahlengang zu bringen. Bei dieser Ausgestaltung unterscheiden sich dann die Sekundärspiegel hinsichtlich ihrer Krümmung, um verschiedene Ebenen des Lichtstrahls auf den gemeinsamen Zielort abbilden zu können. Die Sekundärspiegel können plan oder auch konvex gekrümmt sein.

Ebenso kann es jedoch bevorzugt sein, wenn die Sekundärspiegel an unterschiedlichen Positionen im Strahlengang des Lichtstrahls angeordnet sind. Hierbei können die Sekundärspiegel eine Abbildung unterschiedlicher Ebenen des Lichtstrahls bspw. aufgrund eines unterschiedlichen Abstands zum Primärspiegel ermöglichen, während die Sekundärspiegel selbst untereinander beispielsweise den gleichen Krümmungsradius besitzen.

In einer besonders bevorzugten Ausgestaltung ist zumindest einer der Sekundärspiegel im Brennpunkt des Primärspiegels angeordnet.

Der Vorteil dieser Anordnung besteht darin, daß dann die Brennweite des zumindest einen Sekundärspiegels keinen Einfluß auf den Abbildungsmaßstab hat. Der Abbildungsmaßstab ist dann lediglich durch die Wahl des Abstands des Primärspiegels zum Zielort bestimmt. Vorzugsweise sind alle vorhandenen Sekundärspiegel im Brennpunkt des Spiegels gegeneinander austauschbar angeordnet.

In einer weiteren, besonders bevorzugten Ausgestaltung ist eine optische Wegstrecke vom Primärspiegel zum Zielort gleich der doppelten Brennweite des Primärspiegels.

Bei dieser Wahl des Abstands des Primärspiegels vom Zielort ergibt sich vorteilhafterweise ein Abbildungsmaßstab von 1:1 unabhängig vom Abstand der abzubildenden Ebene vom Primärspiegel und von der Brennweite des bzw. der Sekundärspiegel. Die Brennweite des Sekundärspiegels kann dann vorzugsweise entsprechend den Gleichungen für paraxiale Optik derart gewählt werden, daß die abzubildende Objektebene scharf auf die Bildebene des Zielorts abgebildet wird. Somit ergibt sich vorteilhafterweise ein Abbildungssystem, das automatisch immer einen Abbildungsmaßstab 1:1 liefert und bei dem die gewünschte abzubildende Objektebene durch die Wahl der Brennweite der Sekundärspiegel variiert werden kann, während der Primärspiegel vorteilhafterweise nicht verstellt werden muß, so daß der Justieraufwand nicht erhöht ist.

Nachfolgend werden einige bevorzugte Ausgestaltungen genannt, mit denen eine Abbildung des Lichtstrahls im Nahfeld und/oder Fernfeld ermöglicht wird.

So kann der eine Sekundärspiegel bevorzugt so ausgelegt sein, daß er eine im wesentlich identische Abbildung einer Ebene im Nahfeld des Lichtstrahls ermöglicht, und der andere Sekundärspiegel ist so ausgelegt, daß er eine Abbildung einer Ebene im Fernfeld bzw. eine Fokussierung des Lichtstrahls auf den Zielort ermöglicht.

Diese Ausgestaltung stellt einen vorteilhaft sehr einfachen Aufbau des erfindungsgemäßen Abbildungssystems dar, mit dem zumindest eine Ebene im Nahfeld sowie die Winkelverteilung des Lichtstrahls (Fernfeld) auf den Zielort abgebildet werden kann.

Wenn nur eine Abbildung des Lichtstrahls an zwei Ebenen im Nahfeld erforderlich ist, kann das System vorzugsweise im einfachsten Fall so aufgebaut sein, daß die zumindest zwei Sekundärspiegel so ausgelegt sind, daß sie eine im wesentlichen identische Abbildung zweier in Strahlrichtung beabstandeter Ebenen im Nahfeld des Lichtstrahls ermöglichen.

Hiermit ist es beispielsweise möglich, den Querschnitt des Lichtstrahls in einem Abstand von einem halben Meter und beispielsweise im Abstand von zwei Metern vom Eingang des Lichtstrahls in das Abbildungssystem auf den gemeinsamen Zielort abzubilden. Diese Ebenen entsprechen bspw. der vorderen und hinteren Aperturblende eines Laserresonators.

In einer weiteren bevorzugten Ausgestaltung sind zumindest drei Sekundärspiegel vorhanden, von denen

EP 1 365 217 A1

zumindest zwei so ausgelegt sind, daß sie eine im wesentlichen identische Abbildung zweier in Strahlrichtung beabstandeter Ebenen im Nahfeld des Lichtstrahls ermöglichen, und ein weiterer Sekundärspiegel ist so ausgelegt, daß er eine Abbildung einer Ebene im Fernfeld bzw. eine Fokussierung des Lichtstrahls auf den Zielort ermöglicht.

Bei dieser Ausgestaltung können somit der Querschnitt des Lichtstrahls an zwei Orten im Nahfeld sowie die Winkelverteilung des Lichtstrahls im Fernfeld auf den gemeinsamen Zielort abgebildet werden.

In einer weiteren bevorzugten Ausgestaltung ist ein weiterer Primärspiegel vorhanden, und ein Strahlteiler ist im Strahlengang angeordnet, so daß jeweils ein Teilstrahl auf den ersten Primärspiegel und den zweiten Primärspiegel fällt, und dem weiteren Primärspiegel ist zumindest ein Sekundärspiegel zugeordnet, derart, daß beide Teilstrahlen auf den Zielort, vorzugsweise nebeneinander liegend, abgebildet werden.

Diese Ausgestaltung ermöglicht ohne Umschaltung die gleichzeitige Abbildung zumindest zweier Ebenen des Lichtstrahls auf den gemeinsamen Zielort, beispielsweise können dann beide Ebenen nebeneinander liegend auf den Zielort, beispielsweise Detektor, abgebildet werden, wodurch die Untersuchung der Qualität des Lichtstrahls in geringerer Zeit durchführbar ist.

Dabei ist es weiterhin bevorzugt, wenn der dem weiteren Primärspiegel zugeordnete weitere Sekundärspiegel so ausgelegt ist, daß er eine Abbildung einer Ebene im Fernfeld bzw. eine Fokussierung des Lichtstrahls auf den Zielort ermöglicht, während die dem ersten Primärspiegel zugeordneten Sekundärspiegel eine Abbildung zumindest zweier in Strahlrichtung beabstandeter Ebenen im Nahfeld des Lichtstrahls ermöglichen.

Bei dieser Ausgestaltung kann gleichzeitig das Nah- und das Fernfeld des Lichtstrahls auf den gemeinsamen Zielort abgebildet werden, wodurch eine Umschaltung zwischen Nah- und Fernfeld durch Austauschen der Sekundärspiegel nicht erforderlich ist.

In einer weiteren bevorzugten Ausgestaltung weist der Strahlteiler eine Keilplatte auf, und in dem Strahlengang des vom Strahlteiler durchgelassenen Teilstrahls ist eine weitere Keilplatte angeordnet, deren Keilwinkel halb so groß ist wie derjenige der Keilplatte des Strahlteilers.

Die Verwendung von Keilplatten als Strahlteiler hat allgemein den Vorteil, daß auf der zweiten Grenzschicht der Keilplatte auftretende Reflexe nicht dem reflektierten Strahl überlagert werden. Da eine Keilplatte jedoch ein dispersives Element darstellt, wird durch die genannte Wahl der Keilwinkel eine aufgrund von Dispersion auftretende Aufspaltung des Lichtstrahls beim Durchtritt durch den Strahlteiler durch einen doppelten Durchgang durch die weitere Keilplatte rückgängig gemacht, so daß das erfindungsgemäße Abbildungssystem trotz Verwendung derartiger Keilplatten wellenlängenunabhängig bleibt.

In einer weiteren bevorzugten Ausgestaltung sind der zumindest eine Primärspiegel und die zumindest zwei Sekundärspiegel gegenüber der jeweiligen Lichteinfallsrichtung geringfügig verkippt.

Die Verkippung der in das erfindungsgemäße optische Abbildungssystem eingehenden Spiegel gegenüber der jeweiligen Lichteinfallsrichtung ermöglicht eine abschattungsfreie Abbildung. Die Kippwinkel sind dabei jedoch so klein gewählt, daß die Abbildungsqualität nicht aufgrund durch die Verkippung verursachter Abbildungsfehler begrenzt wird bzw. sich die Abbildungsfehler der Spiegel gegenseitig aufheben. Darüber hinaus sind die Kippwinkel der zumindest zwei Sekundärspiegel vorzugsweise so gewählt, daß die zumindest zwei Sekundärspiegel jeweils eine auf dem Zielort zentrierte Abbildung bewirken.

In einer weiteren bevorzugten Ausgestaltung weisen der zumindest eine Primärspiegel und die zumindest zwei Sekundärspiegel metallische Spiegeloberflächen auf.

Wie bereits erwähnt, eignen sich Spiegel mit metallischen Spiegeloberflächen im Hinblick auf die Wellenlängenunabhängigkeit der Abbildung am besten für das erfindungsgemäße Abbildungssystem. Glasdurchgänge des Lichts werden mit Ausnahme des in einer der zuvor genannten Ausgestaltungen vorgesehenen Strahlteilers vermieden, ebenso wie der Durchgang des Lichts durch dielektrische Schichten.

Das erfindungsgemäße Abbildungssystem verwendet demnach vorzugsweise reflektive optische Abbildungselemente, und vermeidet refraktive Abbildungselemente wie Linsen oder dergleichen.

Das erfindungsgemäße Abbildungssystem kann besonders kompakt aufgebaut werden und eignet sich somit insbesondere für eine Bauweise als portables Gerät, das insbesondere im Kundenservice verwendet werden kann.

Eine Vorrichtung zur Strahlanalyse und/oder -justage eines Lichtstrahls, insbesondere Laserlichtstrahls, weist erfindungsgemäß ein optisches Abbildungssystem nach einer oder mehreren der zuvor genannten Ausgestaltungen auf.

Weitere Vorteile und Merkmale der Erfindung ergeben sich aus der nachfolgenden Beschreibung und der beigefügten Zeichnung.

Es versteht sich, daß die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden mit Bezug auf diese hiernach näher beschrieben. Es zeigen:

4

Fig. 1     eine schematische Darstellung eines optischen Abbildungssystems gemäß einem ersten Ausführungsbeispiel in einer ersten Betriebsstellung;

Fig. 2     das Abbildungssystem in Fig. 1 in einer zweiten Betriebsstellung;

Fig. 3     ein optisches Abbildungssystem gemäß einem weiteren Ausführungsbeispiel; und

Fig. 4     eine Prinzipskizze zur Erläuterung der Funktionsweise des Abbildungssystems in Fig. 1.

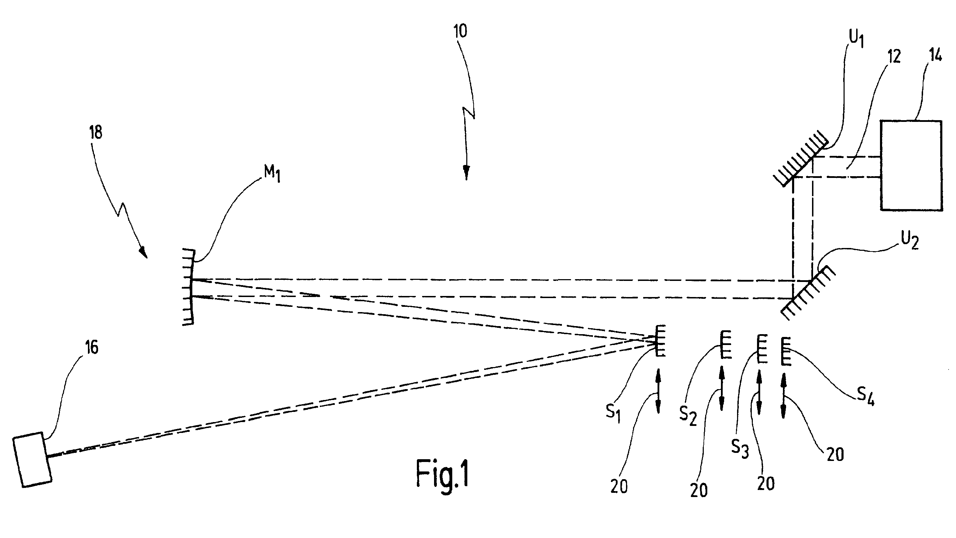

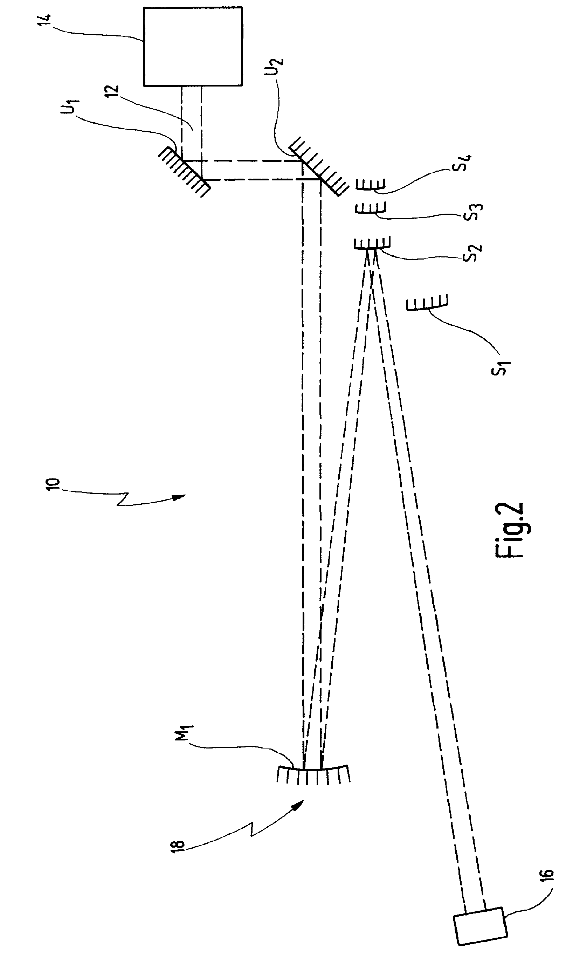

In Figuren 1 und 2 ist ein mit dem allgemeinen Bezugszeichen 10 versehenes optisches Abbildungssystem zum Abbilden zumindest zweier in Strahlrichtung beabstandeter Ebenen eines Lichtstrahls 12 dargestellt. Der Lichtstrahl 12 ist insbesondere ein Laserlichtstrahl, der von einem Laser 14 emittiert wird. Die zumindest zwei in Strahlrichtung beabstandeten Ebenen des Lichtstrahls 12 sollen auf einen gemeinsamen Zielort 16, hier einen Detektor, abgebildet werden.

Von dem Laser 14 ausgehend wird der Lichtstrahl 12 über zwei Umlenkspiegel $U_1$ und $U_2$ in das Abbildungssystem 10 geleitet. Die Umlenkspiegel $U_1$ und $U_2$ sind in Ort und Winkel justierbar, um eine Justage des einfallenden Lichtstrahls 12 zu ermöglichen.

Das Abbildungssystem 10 weist zumindest ein optisch abbildendes Element 18 auf, das ein sammelnder Primärspiegel $M_1$ ist. Der Primärspiegel $M_1$ weist eine sphärische reflektierende metallische Oberfläche auf.

In Ausbreitungsrichtung des Lichtstrahls gesehen sind dem Primärspiegel $M_1$ zumindest zwei, im vorliegenden Ausführungsbeispiel vier Sekundärspiegel $S_1$, $S_2$, $S_3$ und $S_4$ nachgeordnet.

Die Sekundärspiegel $S_1$ - $S_4$ sind wechselweise in den Strahlengang des Lichtstrahls 12 bringbar bzw. aus diesen heraus bewegbar, wie mit Doppelpfeilen 20 schematisch angedeutet ist. Für diesen Zweck sind die Sekundärspiegel $S_1$ - $S_4$ mittels eines nicht näher dargestellten Mechanismus beweglich in dem Abbildungssystem 10 gehalten.

Während die Sekundärspiegel $S_1$ - $S_4$ in dem in Figuren 1 und 2 dargestellten Ausführungsbeispiel an unterschiedlichen Positionen im Strahlengang des Lichtstrahls 12 angeordnet sind, d.h. hier an hintereinander angeordneten beabstandeten Positionen, ist es besonders bevorzugt, wenn die Sekundärspiegel $S_1$ - $S_4$ an einer gleichen Position im Strahlengang des Lichtstrahls 12 gegeneinander austauschbar angeordnet sein können. Im letzteren Fall können die Sekundärspiegel $S_1$ - $S_4$ beispielsweise auf einem als Revolverrad ausgebildeten Träger angeordnet sein, der über eine nicht näher dargestellte Bedienungseinrichtung an einem nicht dargestellten Gehäuse des Abbildungssystems 10 von Hand verdreht werden kann, so daß jeweils einer der Sekundärspiegel $S_1$ - $S_4$ in den Strahlengang des Lichtstrahls 12 gebracht werden kann.

Die Sekundärspiegel $S_1$ - $S_4$ können Planspiegel, zerstreuende oder sammelde sphärische Spiegel sein.

Sowohl der Primärspiegel $M_1$ als auch die Sekundärspiegel $S_1$ - $S_4$ sind vorzugsweise als metallische Spiegel bzw. unbeschichtete Spiegel ausgebildet, wodurch das Abbildungssystem 10 wellenlängenunabhängig arbeitet.

In dem in Figuren 1 und 2 dargestellten Ausführungsbeispiel ist der Sekundärspiegel $S_1$ so ausgelegt, daß er eine Fokussierung des Lichtstrahls 12 mit einer Brennweite von 1 m ermöglicht. Dies entspricht einer Abbildung einer Ebene des Lichtstrahls 12 im Fernfeld, über die die Winkelverteilung des Lichtstrahls im Fernfeld auf den Zielort 16 abgebildet wird.

Der Sekundärspiegel S2 ist so ausgelegt, daß er eine identische Abbildung, d.h. eine 1:1-Abbildung einer Ebene im Nahfeld des Lichtstrahls 12 ermöglicht, und zwar im Abstand von beispielsweise 0,5 m vom Eingang des Abbildungssystems 10.

Der Sekundärspiegel $S_3$ ermöglicht eine im wesentlichen identische Abbildung einer Ebene im Abstand von 1 m vom Eingang des Abbildungssystems 10 im Nahfeld des Lichtstrahls 12 und der Sekundärspiegel $S_4$ ist so ausgelegt, daß er eine im wesentlichen identische Abbildung einer Ebene im Abstand von 2 m im Nahfeld des Lichtstrahls 12 ermöglicht.

In Fig. 1 ist das Abbildungssystem 10 in einer Betriebsstellung dargestellt, in der der Lichtstrahl von dem Primärspiegel $M_1$ auf den Sekundärspiegel $S_1$ gerichtet und von diesem auf den Zielort 16 fokussiert wird. In dieser Betriebsstellung ist somit eine Analyse der Winkelverteilung des Lichtstrahls 12 im Fernfeld möglich.

In Fig. 2 ist das Abbildungssystem 10 in einer Betriebsstellung dargestellt, in der der Sekundärspiegel $S_1$ aus dem Strahlengang des Lichtstrahls 12 herausbewegt wurde, so daß der Lichtstrahl 12 von dem Primärspiegel $S_1$ auf den Sekundärspiegel S2 und von diesem auf den Zielort 16 reflektiert wird. In dieser Betriebsstellung erfolgt eine im wesentlichen identische Abbildung einer Ebene des Lichtstrahls 12 im Abstand von 0,5 m vom Eingang des Abbildungssystems 10 auf den Zielort 16, d.h. auf den Detektor. Wird der Sekundärspiegel S2 ebenfalls aus dem Strahlengang des Lichtstrahls 12 herausbewegt, wird der Lichtstrahl 12 von dem Primärspiegel $M_1$ auf den Sekundärspiegel $S_3$, und wenn dieser aus dem Strahlengang herausbewegt wird, auf den Sekundärspiegel $S_4$ reflektiert und von diesem wieder entsprechend auf den Zielort 16 reflektiert.

Der Primärspiegel $M_1$ und die Sekundärspiegel $S_1$ - $S_4$ sind gegenüber der jeweiligen Lichteinfallsrichtung des Lichtstrahls 12 auf diese Spiegel geringfügig verkippt. Die Kippwinkel sind dabei jedoch so gewählt, daß die Abbildungsqualität nicht aufgrund durch die Verkippung verursachter Abbildungsfehler begrenzt wird. Die Kippwinkel der Sekundärspiegel $S_1$ - $S_4$ sind zudem so gewählt, daß das Bild jeweils auf dieselbe Stelle des Zielorts 16 zentriert ist.

Im Anhang 1 sind in einem Beispiel die optischen Daten des Abbildungssystems 10 nach dem Code V tabellarisch dargestellt. Aus diesen Daten ergeben sich die Abbildungseigenschaften der Spiegel des Abbildungssystems 10, deren Kippwinkel gegenüber der jeweiligen Lichteinfallsrichtung auf diese Spiegel sowie die Abstände zwischen den einzelnen Spiegeln.

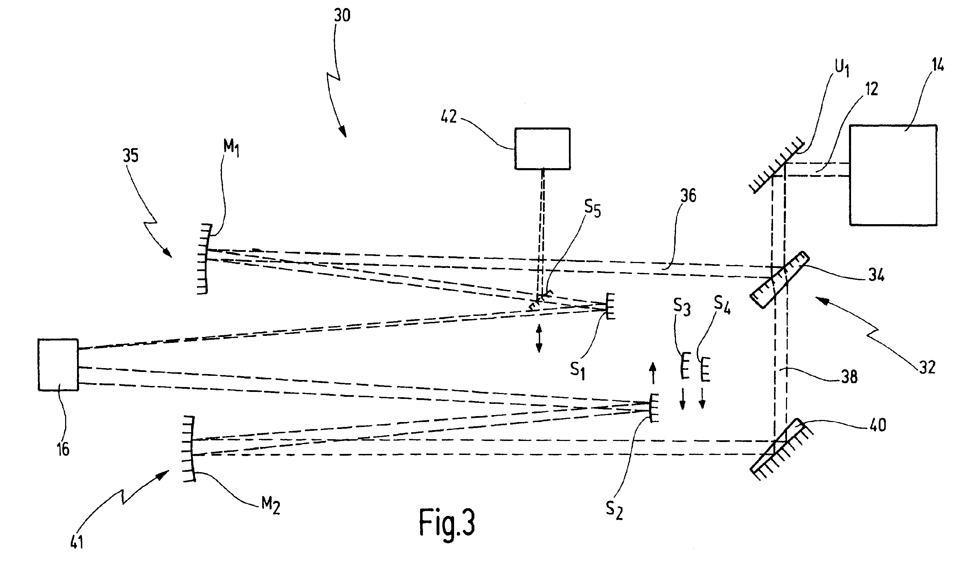

In Fig. 3 ist gemäß einem weiteren Ausführungsbeispiel ein optisches Abbildungssystem 30 dargestellt. Mit dem Abbildungssystem 10 gleiche oder vergleichbare Komponenten sind mit den gleichen Bezugszeichen versehen wie bei dem Abbildungssystem 10.

Im Strahlengang des Lichtstrahls 12 befindet sich wieder ein Umlenkspiegel $U_1$ am Eingang des Abbildungssystems 30. Dem Umlenkspiegel $U_1$ ist ein Strahlteiler 32 nachgeordnet. Der Strahlteiler 32 weist eine Keilplatte 34 auf. Mittels der Keilplatte 34 wird der Lichtstrahl 12 in einen ersten Teilstrahl 36 und einen zweiten Teilstrahl 38 aufgespalten. Der erste Teilstrahl 36, der an der Frontseite der Keilplatte 34 reflektiert wird, wird für die Abbildung des Lichtstrahls 12 unter Fernfeldbedingungen genutzt.

Der von der Keilplatte 34 durchgelassene zweite Teilstrahl 38 wird für die Abbildung des Lichtstrahls 12 unter Nahfeldbedingungen genutzt.

Im Strahlengang des ersten Teilstrahls 36 ist zumindest ein optisch abbildendes Element 35 in Form eines sammelnden Primärspiegels $M_1$ angeordnet, dem ein Sekundärspiegel $S_1$ nachgeordnet ist, der so ausgelegt ist, daß der Teilstrahl 36 auf den Zielort 16 fokussiert wird.

Im Strahlengang des zweiten Teilstrahls 38 ist eine zweite Keilplatte 40 angeordnet, deren Rückseite reflektierend ist. Der Keilwinkel der zweiten Keilplatte 40 ist dabei halb so groß wie der Keilwinkel der ersten Keilplatte 34, so daß durch Reflexion des zweiten Teilstrahls 38 an der Rückseite der zweiten Keilplatte 40 und doppeltem Durchgang durch die Keilplatte 40 ein chromatischer Kipp des durch die Keilplatte 34 transmittierten Teilstrahls 38 kompensiert wird.

Im weiteren Verlauf des Strahlengangs des zweiten Teilstrahls 38 ist zumindest ein optisch abbildendes Element 41 in Form eines sammelnden Primärspiegels $M_2$ angeordnet. Dem Primärspiegel $M_2$ sind drei Sekundärspiegel $S_2$, $S_3$ und $S_4$ nachgeordnet, die wiederum beweglich sind, um in den Strahlengang des zweiten Teilstrahls 38 gebracht bzw. aus diesem entfernt werden zu können. Die Sekundärspiegel S2 - $S_4$ sind wie bei dem Abbildungssystem 10 so ausgelegt, daß sie eine identische Abbildung von zueinander in Strahlrichtung beabstandeter Ebenen des Lichtstrahls 12 auf den Zielort 16 abbilden.

Der erste Teilstrahl 36 und der zweite Teilstrahl 38 werden auf den Zielort 16 nebeneinander liegend abgebildet. Mit dem Abbildungssystem 30 ist es somit möglich, gleichzeitig Nah- und Fernfeld des Lichtstrahls 12 auf den gemeinsamen Zielort 16 abzubilden.

Im Strahlengang des ersten Teilstrahls 36 ist ferner ein zusätzlicher Sekundärspiegel $S_5$ angeordnet, der ebenfalls beweglich ist und wahlweise in den Strahlengang des ersten Teilstrahls 36 gebracht und aus diesem wieder herausgenommen werden kann. Der weitere Sekundärspiegel $S_5$ ist so ausgelegt, daß er eine Fokussierung des Teilstrahls 36 auf einen weiteren Zielort bzw. weiteren Detektor 42 ermöglicht, beispielsweise um spektroskopische oder energetische Analysen des Lichtstrahls 12 durchzuführen.

Die optischen Daten des Abbildungssystems 30 sind identisch zu dem Abbildungssystem 10 gemäß Figuren 1 und 2, mit Ausnahme der gegenüber dem Abbildungssystem 10 umgekehrten Vorzeichen der Kippwinkel der Spiegel $M_2$ und $S_2$ - $S_4$.

Das Abbildungssystem 10 wie auch das Abbildungssystem 30 sind jeweils kompakt und eignen sich für eine portable Ausgestaltung.

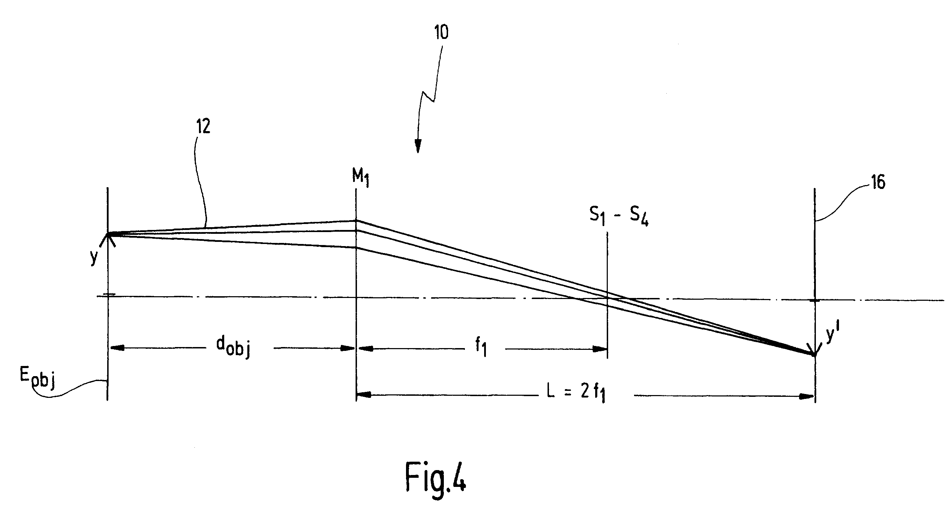

In Fig. 4 ist das Abbildungssystem 10 in einer optischen Prinzipskizze zur Erläuterung schematisch dargestellt.

Eine besonders bevorzugte Ausführungsform des Abbildungssystems 10 in Fig. 1 (und ebenso des Abbildungssystems 30 in Fig. 3) sieht vor, daß die Sekundärspiegel $S_1$ - $S_4$ allesamt im Brennpunkt des Primärspiegels $M_1$ angeordnet sind, der gemäß Fig. 4 die Brennweite $f_1$ besitzt.

Für einen parallel auf den Primärspiegel $M_1$ einfallenden Lichtstrahl 12 (telezentrischer Eingang, der für Laserstrahlen typisch ist) hat in diesem Fall die Brennweite der Sekundärspiegel $S_1$, $S_2$, $S_3$, $S_4$, d.h. des gerade im Lichtweg positionierten Sekundärspiegels $S_1$, $S_2$, $S_3$ oder $S_4$ keinen Einfluß auf den Abbildungsmaßstab. Der Abbildungsmaßstab ist lediglich durch die Wahl der Länge der optischen Wegstrecke L vom Primärspiegel $M_1$ zum Zielort 16 bestimmt.

Wählt man die optische Wegstrecke L vom Primärspiegel $M_1$ zum Zielort 16 gleich der doppelten Brennweite $f_1$ des Primärspiegels $M_1$, so ergibt sich ein Abbildungsmaßstab von 1:1 unabhängig vom Abstand $d_{OBJ}$ des abzubildenden Objekts y vom Primärspiegel $M_1$ und unabhängig von der Brennweite des Sekundärspiegels $S_1$, $S_2$, $S_3$ oder $S_4$. In Fig. 4 ist dargestellt, daß das Bild y' gleich groß wie das Objekt y ist. Somit wird die Objektebene $E_{OBJ}$ 1:1 auf den Zielort 16 abgebildet. Um nun verschiedene voneinander beabstandete Objektebenen $E_{OBJ}$ ohne Ortsveränderung des Primärspiegels M₁ im Maßstab 1:1 auf den Zielort 16 scharf abzubilden, kann die Brennweite der Sekundärspiegel $S_1$, $S_2$, $S_3$ und $S_4$ entsprechend den Gleichungen für paraxiale Optik entsprechend gewählt werden, d.h. jeder abzubildenden Ebene $E_{OBJ}$ ist dann ein bestimmter Sekundärspiegel $S_1$, $S_2$, $S_3$ oder $S_4$ zugeordnet, der die Brennweite f2 mit

$$\frac{1}{f_2} = \frac{1}{f_1} - \frac{1}{\left( f_1 - \dfrac{f_1\, d_{OBJ}}{d_{OBJ} - f_1} \right)}$$

aufweist.

Somit kann durch einfaches Austauschen der Sekundärspiegel $S_1$, $S_2$, $S_3$ oder $S_4$ gegeneinander die gewünschte Objektebene $E_{OBJ}$ im gewünschten Abstand vom Primärspiegel M₁ auf den Zielort 16 abgebildet werden. Mit anderen Worten wird der Abstand der abzubildenden Objektebene $E_{OBJ}$ durch die Wahl der Brennweite $f_2$ des in den Strahlengang gestellten Sekundärspiegels $S_1$, $S_2$, $S_3$ oder $S_4$ variiert.

Während zuvor beschrieben wurde, daß die Sekundärspiegel $S_1$ - $S_4$ genau im Brennpunkt des Primärspiegels M₁ angeordnet sind, können die Sekundärspiegel $S_1$ - $S_4$ auch geringfügig außerhalb des Brennpunktes des Primärspiegels M₁ sitzen, um etwa hohe Strahlenbelastungen durch die scharfe Fokussierung des Lichts auf die Sekundärspiegel $S_1$ - $S_4$ zu vermeiden.

In Verbindung mit dem Zielort bzw. Detektor 16 und dem ggf. weiteren Detektor 42 bildet das Abbildungssystem 10 bzw. 30 eine Vorrichtung zur Strahlanalyse bzw. Justage des Lichtstrahls 12 bzw. zur Justage im Laserresonator, der den Lichtstrahl 12 erzeugt.

```
CodeV - FABRICATION DATA

Variables reflektives Abbildungssystem

ELEMENT    RADIUS OF CURVATURE                    APERTURE DIAMETER
NUMBER     FRONT         BACK       THICKNESS     FRONT      BACK        GLASS
--------------------------------------------------------------------------------------

OBJECT                   INF   *4    INFINITY*1
                                                  20.0000
                                       0.0000
           DECENTER( 1)
   1          INF                    -50.0000      30.0000               REFL
           DECENTER( 2)
   2          INF                    250.0000      30.0000               REFL
                                                   30.0000
                                       0.0000
           DECENTER( 3)
   3       -500.0000 CC                0.0000      30.0000               REFL
                                     -191.9009*3
           DECENTER( 4)*5                  .
   4       -150.0000*2                 0.0000      10.0000               REFL
           DECENTER( 5)
                                                   20.1674
           IMAGE DISTANCE =            0.0000
   IMAGE      INF                                  20.1674


--------------------------------------------------------------------------------------

NOTES - Positive radius indicates the center of curvature is to the right
        Negative radius indicates the center of curvature is to the left
      - Dimensions are given in millimeters

      - Thickness is axial distance to next surface

      - Image diameter shown above is a paraxial value,
        it is not a ray traced value
```

| DECENTERING CONSTANTS | | | | | | |
|---|---|---|---|---|---|---|
| DECENTER | X | Y | Z | ALPHA | BETA | GAMMA |
| D ( 1) (BEND) | 0.0000 | 0.0000 | 0.0000 | 0.0000 | -45.0000 | 0.0000 |
| D ( 2) (BEND) | 0.0000 | 0.0000 | 0.0000 | 45.0000 | 0.0000 | 0.0000 |
| D ( 3) (BEND) | 0.0000 | 0.0000 | 0.0000 | -3.0000 | 0.0000 | 0.0000 |
| D ( 4) (BEND) | 0.0000 | 0.0000 | 0.0000 | 8.3773*5 | 0.0000 | 0.0000 |
| D ( 5) (GLB S4) | 0.0000 | 67.6707 | 59.8167 | 9.0000 | 0.0000 | 0.0000 |

A decenter defines a new coordinate system (displaced and/or rotated) in which subsequent surfaces are defined. Surfaces following a decenter are aligned on the local mechanical axis (z-axis) of the new coordinate system. The new mechanical axis remains in use until changed by another decenter. The order in which displacements and tilts are applied on a given surface is specified using different decenter types and these generate dirrerent new coordinate systems; those used here are explained below. Alpha, beta, and gamma are in degrees.

```
DECENTERING CONSTANT KEY:

    TYPE              TRAILING CODE        ORDER OF APPLICATION
    ------------------------------------------------------------------------

    DECENTER                            DISPLACE (X,Y,Z)
                                        TILT (ALPHA,BETA,GAMMA)
                                        REFRACT AT SURFACE
                                        THICKNESS TO NEXT SURFACE

    DECENTER & BEND      BEND           DECENTER (X,Y,Z,ALPHA,BETA,GAMMA)
                                        REFLECT AT SURFACE
                                        BEND (ALPHA,BETA,GAMMA)
                                        THICKNESS TO NEXT SURFACE

    GLOBAL DECENTER      GLB Sj         DECENTER (X,Y,Z,ALPHA,BETA,GAMMA) WITH
                                           RESPECT TO GLOBAL SURFACE
                                        REFRACT AT SURFACE
                                        THICKNESS TO NEXT SURFACE

    ------------------------------------------------------------------------

REFERENCE WAVELENGTH =      157.0 NM

    ------------------------------------------------------------------------

* ZOOM PARAMETERS     POS. 1      POS. 2      POS. 3      POS. 4
         *1     =       INF    1700.0000    700.0000    200.0000
         *2     =  -150.0000  -100.0000   -300.0000       INF
         *3     =  -191.9009  -242.8636   -233.3418   -218.9504
         *4     =     0.0000     0.0000      0.0000      0.0000
         *5     =     8.3773     6.9937      7.2172      7.5827

    ------------------------------------------------------------------------

    This is a decentered system.  If elements with power are
    decentered or tilted, the first order properties are probably
    inadequate in describing the system characteristics.

                    POS. 1

INFINITE CONJUGATES
    EFL      =   1109.4064
    BFL      =      2.6739
    FFL      =  -3648.0212
    F/NO     =     50.0000


                    POS. 2  POS. 3  POS. 4
AT USED CONJUGATES
    REDUCTION    = 0.9991     0.9998     1.0000
    FINITE F/NO  = 250.0000   250.0000   250.0000
    OBJECT DIST  = 0.170E+04  0.700E+03  0.200E+03
```

## Patentansprüche

1. Optisches Abbildungssystem zum Abbilden zumindest zweier in Strahlrichtung beabstandeter Ebenen eines Lichtstrahls, insbesondere Laserlichtstrahls, auf einen gemeinsamen Zielort (16), beispielsweise einen Detektor, mit zumindest einem im Strahlengang des Lichtstrahls (12) angeordneten optisch abbildenden Element (18; 35, 41), **dadurch gekennzeichnet, daß** das zumindest eine optisch abbildende Element (18; 35, 41) ein sammelnder Primärspiegel ($M_1$; $M_1$, $M_2$) ist, und daß dem Primärspiegel ($M_1$; $M_1$, $M_2$) zumindest zwei Sekundärspiegel ($S_1$, $S_2$, $S_3$, $S_4$) nachgeordnet sind, die wechselweise in den Strahlengang bringbar sind, wobei die Sekundärspiegel ($S_1$, $S_2$, $S_3$, $S_4$) so ausgelegt sind, daß der eine Sekundärspiegel ($S_1$, $S_2$, $S_3$, $S_4$) eine Abbildung der einen Ebene und der andere Sekundärspiegel ($S_1$, $S_2$, $S_3$, $S_4$) eine Abbildung der anderen Ebene des Lichtstrahls (12) jeweils auf den Zielort (16) ermöglicht.

2. Abbildungssystem nach Anspruch 1, **dadurch gekennzeichnet, daß** die Sekundärspiegel ($S_1$, $S_2$, $S_3$, $S_4$) an

gleicher oder ähnlicher Position im Strahlengang des Lichtstrahls gegeneinander austauschbar angeordnet sind.

3. Abbildungssystem nach Anspruch 1, **dadurch gekennzeichnet, daß** die Sekundärspiegel ($S_1$, $S_2$, $S_3$, $S_4$) an unterschiedlichen Positionen im Strahlengang des Lichtstrahls (12) angeordnet sind.

4. Abbildungssystem nach einem der Ansprüche 1 bis 3, **dadurch gekennzeichnet, daß** zumindest einer der Sekundärspiegel ($S_1$, $S_2$, $S_3$, $S_4$) im Brennpunkt des Primärspiegels ($M_1$; $M_1$, $M_2$) angeordnet ist.

5. Abbildungssystem nach einem der Ansprüche 1 bis 4, **dadurch gekennzeichnet, daß** eine optische Wegstrecke (L) vom Primärspiegel ($M_1$; $M_1$, $M_2$) zum Zielort (16) gleich der doppelten Brennweite des Primärspiegels ($M_1$; $M_2$, $M_3$) ist.

6. Abbildungssystem nach einem der Ansprüche 1 bis 5, **dadurch gekennzeichnet, daß** der eine Sekundärspiegel ($S_2$, $S_3$, $S_4$) so ausgelegt ist, daß er eine im wesentlichen identische Abbildung einer Ebene im Nahfeld des Lichtstrahls (12) ermöglicht, und der andere Sekundärspiegel ($S_1$) so ausgelegt ist, daß er eine Abbildung einer Ebene im Fernfeld bzw. eine Fokussierung des Lichtstrahls (12) auf den Zielort (16) ermöglicht.

7. Abbildungssystem nach einem der Ansprüche 1 bis 5, **dadurch gekennzeichnet, daß** die zumindest zwei Sekundärspiegel ($S_1$, $S_3$, $S_4$) so ausgelegt sind, daß sie eine im wesentlichen identische Abbildung zweier in Strahlrichtung beabstandeter Ebenen im Nahfeld des Lichtstrahls ermöglichen.

8. Abbildungssystem nach einem der Ansprüche 1 bis 7, **dadurch gekennzeichnet, daß** zumindest drei Sekundärspiegel ($S_1$, $S_2$, $S_3$, $S_4$) vorhanden sind, von denen zumindest zwei so ausgelegt sind, daß sie eine im wesentlichen identische Abbildung zweier in Strahlrichtung beabstandeter Ebenen im Nahfeld des Lichtstrahls ermöglichen, und ein weiterer Sekundärspiegel ($S_1$) so ausgelegt ist, daß er eine Abbildung einer Ebene im Fernfeld bzw. eine Fokussierung des Lichtstrahls (12) auf den Zielort (16) ermöglicht.

9. Abbildungssystem nach einem der Ansprüche 1 bis 8, **dadurch gekennzeichnet, daß** ein weiterer Primärspiegel ($M_1$) vorhanden ist, daß im Strahlengang ein Strahlteiler (32) angeordnet ist, so daß jeweils ein Teilstrahl (36, 38) auf den ersten Primärspiegel ($M_2$) und den zweiten Primärspiegel ($M_1$) fällt, und daß dem weiteren Primärspiegel ($M_1$) zumindest ein Sekundärspiegel ($S_1$) zugeordnet ist, derart, daß beide Teilstrahlen (36, 38) auf den Zielort (16), vorzugsweise nebeneinander liegend, abgebildet werden.

10. Abbildungssystem nach Anspruch 9, **dadurch gekennzeichnet, daß** der dem weiteren Primärspiegel ($M_1$) zugeordnete weitere Sekundärspiegel ($S_1$) so ausgelegt ist, daß er eine Abbildung einer Ebene im Fernfeld bzw. eine Fokussierung des Lichtstrahls (12) auf den Zielort (16) ermöglicht, während die dem ersten Primärspiegel (M2) zugeordneten Sekundärspiegel ($S_1$, $S_2$, $S_3$, $S_4$) eine Abbildung zumindest zweier in Strahlrichtung beabstandeter Ebenen im Nahfeld des Lichtstrahls (12) ermöglichen.

11. Abbildungssystem nach Anspruch 9 oder 10, **dadurch gekennzeichnet, daß** der Strahlteiler (32) eine Keilplatte (34) aufweist, und daß in dem Strahlengang des vom Strahlteiler (32) durchgelassenen Teilstrahls (38) eine weitere Keilplatte (40) angeordnet ist, deren Keilwinkel halb so groß ist wie derjenige der Keilplatte (34) des Strahlteilers (32).

12. Abbildungssystem nach einem der Ansprüche 1 bis 11, **dadurch gekennzeichnet, daß** der zumindest eine Primärspiegel ($M_1$; $M_1$, $M_2$) und die zumindest zwei Sekundärspiegel ($S_1$, $S_2$, $S_3$, $S_4$) gegenüber der jeweiligen Lichteinfallsrichtung geringfügig verkippt sind.

13. Abbildungssystem nach einem der Ansprüche 1 bis 12, **dadurch gekennzeichnet, daß** der zumindest eine Primärspiegel ($M_1$; $M_1$, $M_2$) und die zumindest zwei Sekundärspiegel ($S_1$, $S_2$, $S_3$, $S_4$) metallische Spiegeloberflächen aufweisen.

14. Vorrichtung zur Strahlanalyse und/oder -justage eines Lichtstrahls bzw. zur Justage eines Laserresonators, insbesondere Laserlichtstrahls, **gekennzeichnet durch** ein optisches Abbildungssystem (10; 30) nach einem der Ansprüche 1 bis 13.

Fig.1

Fig.2

Fig.3

EP 1 365 217 A1

Fig.4

EP 1 365 217 A1

| Europäisches Patentamt | **EUROPÄISCHER RECHERCHENBERICHT** | Nummer der Anmeldung EP 03 00 8628 |
|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | GB 1 531 893 A (RANK ORGANISATION LTD) 8. November 1978 (1978-11-08) * Seite 1, Zeile 28 - Zeile 92 * * Seite 2, Zeile 19 - Zeile 69 * * Seite 2, Zeile 111 - Seite 5, Zeile 60 * * Abbildungen 1,2 * | 1-8,12, 13 | G01J1/42 |
| D,A | WO 01 59414 A (LAMBDA PHYSIK AG) 16. August 2001 (2001-08-16) * Zusammenfassung * * Seite 5, Absatz 6 - Seite 11, Absatz 1 * * Abbildung 1 * | 1-14 | |
| A | US 4 707 836 A (TRAVIS ALAN J B) 17. November 1987 (1987-11-17) * Zusammenfassung * * Spalte 1, Zeile 55 - Spalte 2, Zeile 19 * * Abbildung 1 * | 1-14 | |
| A | MANN K ET AL: "CHARACTERIZATION OF EXCIMER LASER BEAM PARAMETERS" PROCEEDINGS OF THE SPIE, SPIE, BELLINGHAM, VA, US, Bd. 2870, 7. Juli 1996 (1996-07-07), Seiten 367-377, XP001010849 * Seite 371, Absatz 1 - Seite 372, Absatz 2 * * Abbildung 5 * | 1-14 | RECHERCHIERTE SACHGEBIETE (Int.Cl.7) G01J G02B |

Der vorliegende Recherchenbericht wurde für alle Patentansprüche erstellt

| Recherchenort | Abschlußdatum der Recherche | Prüfer |
|---|---|---|
| MÜNCHEN | 3. September 2003 | Haller, M |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 03 00 8628

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-09-2003

| Im Recherchenbericht angeführtes Patentdokument | | Datum der Veröffentlichung | Mitglied(er) der Patentfamilie | | Datum der Veröffentlichung |
|---|---|---|---|---|---|
| GB 1531893 | A | 08-11-1978 | DE | 2720990 A1 | 24-11-1977 |
| | | | IL | 52049 A | 31-10-1979 |
| | | | NL | 7705045 A | 14-11-1977 |
| WO 0159414 | A | 16-08-2001 | DE | 10190482 T0 | 08-05-2002 |
| | | | WO | 0159414 A1 | 16-08-2001 |
| | | | JP | 2003522941 T | 29-07-2003 |
| | | | US | 2003150997 A1 | 14-08-2003 |
| US 4707836 | A | 17-11-1987 | EP | 0172024 A2 | 19-02-1986 |
| | | | JP | 61116890 A | 04-06-1986 |

EPO FORM P0461

Für nähere Einzelheiten zu diesem Anhang : siehe Amtsblatt des Europäischen Patentamts, Nr.12/82